# EUROPEAN PATENT APPLICATION

(11) **EP 2 853 965 A1**
(43) Date of publication of application: **01.04.2015**
(21) Application number: 13186597.4
(22) Date of filing: 30.09.2013
(51) Int. Cl.: G05B 19/414

(54) **Time deterministic human-machine interface device, and system and method for configuring the same**

(71) Applicant: Siemens Aktiengesellschaft, 80333 München (DE)
(72) Inventor: Ganachari, Mahantesh, 562130 Bengaluru (IN)

(57) **Abstract**

The present invention provides a time deterministic human-machine interface device (106). The human-machine interface device (106) includes a software interpretation platform (202) and a configurable hardware interpretation platform (204). The software interpretation platform (202) includes at least one processing unit (208), an operating system (212) deployed on the processing unit (208), a runtime application (214) instantiated on the operating system (212). The configurable hardware interpretation platform (204) includes at least one field-programmable gate array (224). The field-programmable gate array (224) is configured for independently executing at least one logical function assigned to the human-machine interface device (106). The present invention also provides a system and a method for configuring the time deterministic human-machine interface device (106).

## Description

The present invention relates to a human-machine interface device suitable for use in an automation system and more particularly, to a human-machine interface device configured for time deterministic execution of one or more time-critical logical functions assigned to the human-machine interface device.

Industrial automation systems are based on designing, implementing, and monitoring control systems using specific data processing systems such as programmable logic controllers. Programmable logic controllers are special computing devices that are commonly used for synchronizing the flow of inputs from sensors with the flow of outputs to actuators based on a programming logic deployed on the programmable logic controllers. In order to reduce the load on these programmable logic controllers, the industrial automation systems have further specific devices, which provide an interface to operating personnel. These are referred to as control and monitoring devices or human-machine interface devices.

The term human-machine interface device is a generic term covering all components associated with this group of devices, which can be stationary or mobile.

Human-machine interface devices are used in industrial automation systems to display and control process data related to industrial equipment, and hence, act as important aids for the operating personnel. This function is generally referred to as Supervisor Control and Data Acquisition (SCADA). To this end the human-machine interface device generally has specific hardware, e.g. a touch-screen, and is specifically screened from environmental influences. Specific software is also operated therein. This provides functions, which enhance user-friendliness, quality and safety of operation by an operator. Thus, human-machine interface devices can be used to visualize, control, configure, and generate interactive process maps related to the industrial equipment. On the one hand, this allows the selective display of responses of the industrial equipment, generally in the form of measured values and messages. On the other hand, the customized predefinition of control operations and data inputs allows the industrial equipment to be switched to required states.

In a typical industrial plant, programmable logic controllers and other field devices as well as human-machine interface devices are procured from different vendors and assembled to interact with each other. This entails a certain degree of flexibility in configuration and management of the industrial automation system. To achieve the desired flexibility, an engineering station is provided to generate a runtime application, which is downloaded to a human-machine interface device. The runtime application includes a set of screens for visualizing an industrial process or a part thereof and also, configuration details of various parameters related to establishing a communication channel between the human-machine interface device and one or more programmable logic controllers and/or field devices in the automation system. When a human-machine interface device is satisfactorily configured, an operator can monitor and control one or more processes in a required manner.

In general, numerous logical functions are configured on an individual human-machine interface device as part of configuration process thereof. While many of these are routine logical functions such as display of process values and so on, such logical functions often also include several time critical logical functions which should ideally be executed in a time deterministic and reliable manner. As just one example of such time critical logical function, a stop button may be configured on a human-machine interface device which is configured to issue data signals to achieve emergency stop a machine in the industrial set up. In practice, when such stop button is triggered, the human-machine interface device updates a process parameter value in a corresponding programmable logic controller, which thereby issues a stop signal to a relevant field device.

Typically, a human-machine interface device is an embedded system with a central processing unit and different peripherals interfaced to it. The central processing unit acts as a master device controlling all the peripherals units attached thereto. The central processing unit executes the runtime application.

As is generally well understood, software-based processing systems, such as those found in the current human-machine interface devices, are not suitable for hard real time processing needs.

As will now be understood, as per the current state of the art, execution of various time critical logical functions is undesirably dependent on availability of underlying processor, which caters to multitude of processes being executed within the human-machine interface device and attends to individual processes in accordance with a defined allocation algorithm. In addition, the software systems may become unresponsive at times and may not be able to process a logical function call without undue delay.

In effect, reliability of the human-machine interface device depends on computational load on the central processing unit at a given instant of time and also, efficiency of runtime application. If the central processing unit is too busy to attend a priority task or the runtime application malfunctions, it adversely impacts reliability of the human-machine interface device in general.

The problem is further aggravated owing to inherent flexibility provided for configuring various logical functions on a human-machine interface device. At times, it is difficult to ensure consistent performance with regard to one or more time-critical logical functions, especially when a customer also adds various third party components from another vendor.

As will now be appreciated, a human-machine interface device is not a hard real time device. As a result, even one or more time critical logical functions configured on a human-machine interface device, which should ideally be handled in real time, are dependent on response of 'non-real time' runtime application deployed on the human-machine interface device. It will be well understood that such implementation will undesirably suffer from unpredictable time lag between excitation and response.

The problem in the current techniques will be better understood with regard to the following example.

A human-machine interface device typically provides a set of configurable function keys on a front panel thereof. These function keys are hard keys and implemented using physical elements as against soft keys will are implemented using software and displayed on a display screen of the human-machine interface device. One of the function keys is configured to shutdown a motor installed in the industrial plant. In addition, a third-party ActiveX control or any other binary which consumes significant computational resources of the human-machine interface device is also installed. Further, several tags may be configured, which may be programmed to acquire process values from one or more programmable logic controllers at short intervals of time. During runtime, the ActiveX control brings down the processor time available for the background threads in the runtime software. The computational resources may be further constrained due to network delays, bugs in the software and so on. In this scenarios if operator tries to shut down the motor and the interrupt generated by the configured function key may go unattended due to unresponsiveness of the human-machine interface device. As will be readily appreciated, such situation is highly undesirable.

As will be clear from the preceding description, it is difficult and often, impossible to ensure deterministic nature for execution of time critical logical functions in state-of-the-art human-machine interface devices.

In the past, various techniques have been proposed to handle time critical logical functions in human-machine interface devices. One of the techniques is based on assigning higher priority to threads corresponding to time-critical logical functions in a multi-threaded execution environment. Another solution proposed towards this end is embedding configured logic in to driver software such that the driver software directly communicates with the PLC and thereby, reduces the latency in programmable logic controller access. Yet another technique proposes providing dedicated hardware for the critical logical functions like stop button, and handling user inputs using system interrupts.

While various techniques as listed above endeavour to provide a deterministic human-machine interface device, the practical results are far less than satisfactory and the need to efficiently handle time-critical logical functions in a human-machine interface device continues to persist.

It is therefore an object of the present invention to provide a human-machine interface device configured for time deterministic execution of one or more time-critical logical functions assigned to the human-machine interface device.

The object is achieved by providing a human-machine interface device according to claim 1 and a method and a system for configuring the same according to claims 11 and 14 respectively. Further embodiments of the present invention are addressed in the dependent claims.

The underlying concept of the present invention is to provide a novel architecture for human-machine interface devices based on hardware-software co-synthesis. The human-machine interface device includes two independent platforms: a software interpretation platform and a configurable hardware interpretation platform, which are communicatively coupled to each other as well as to a peripheral communication infrastructure provided in the human-machine interface device. While the software interpretation platform is implemented in a manner similar to the conventional architecture, the configurable hardware interpretation platform is implemented using a field-programmable gate array. One or more logical functions assigned to the human-machine interface device that are identified as time critical are configured to be executed on the field-programmable gate array. The logical functions are configured to be triggered based on an input therefor received either from the peripheral communication infrastructure or from the software interpretation platform as may be desirable.

In a first aspect of the present invention, a human-machine interface device suitable for use in an automation system is provided. The human-machine interface device includes a software interpretation platform and a configurable hardware interpretation platform. The software interpretation platform includes at least one processing unit, an operating system deployed on the processing unit, a runtime application instantiated on the operating system. The configurable hardware interpretation platform includes at least one field-programmable gate array. The field-programmable gate array is configured for independently executing at least one logical function assigned to the human-machine interface device based on a real-time processing logic deployed thereon.

In a second aspect of the present invention, a method for configuring a human-machine interface device according to the first aspect of the present invention is provided. At a first step, a set of logical functions for instantiating on the human-machine interface device are defined. The logical functions are subsequently classified into at least one of a set of routine logical functions and a set of time-critical logical functions. Finally, a runtime application corresponding to at least one of the routine logical functions is configured and deployed on the software interpretation platform, and a real-time processing logic corresponding to at least one of the time-critical logical functions is configured and deployed on the configurable hardware interpretation platform.

In a third aspect of the present invention, a system for configuring a human-machine interface device according to the first aspect of the present invention is provided. The system includes a development module, a first configuration module, and a second configuration module. The development module provides a first user interface for defining a set of logical functions for instantiating on the human-machine interface device, and further provides a second user interface for classifying the logical functions into at least one of a set of routine logical functions and a set of time-critical logical functions. The first configuration module compiles a runtime application corresponding to at least one of the routine logical functions, and deploys the runtime application on the software interpretation platform. The second configuration module compiles a real-time processing logic corresponding to at least one of the time-critical logical functions, and deploys the real-time processing logic on the configurable hardware interpretation platform.

Accordingly, the present invention provides a human-machine interface device configured for time deterministic execution of one or more time-critical logical functions assigned to the human-machine interface device.

The present invention is further described hereinafter with reference to illustrated embodiments shown in the accompanying drawings, in which:
- FIG 1: illustrates a schematic view of an automation system in accordance with an embodiment of the present invention,
- FIG 2: illustrates a schematic view of a human-machine inter-face device in accordance with an embodiment of the present invention,
- FIG 3: illustrates a method for configuring a human-machine interface device in accordance with an embodiment of the present invention, and
- FIG 4: illustrates a system for configuring a human-machine interface device in accordance with an embodiment of the present invention.

Various embodiments are described with reference to the drawings, wherein like reference numerals are used to refer to like elements throughout; a repeated description of such elements in individual figures is omitted. The description of an element given with regard to a particular figure is valid for all other figures unless noted otherwise. Furthermore, not all elements are shown in each figure. However, absence of an element in a figure does not necessarily imply absence of that element. In fact, in some drawings some elements have been intentionally omitted in order to not obscure the described features.

In the following description, for purpose of explanation, numerous specific details are set forth in order to provide a thorough understanding of one or more embodiments. It may be evident that such embodiments may be practiced without these specific details.

It should be noted that while some embodiments have been described with reference to apparatus type claims whereas other embodiments have been described with reference to method type claims, a person skilled in the art will gather from the description provided herein, unless other notified, in addition to any combination of features belonging to one aspect, any combination between features relating to different aspects or embodiments, for example even between features of the apparatus type claims and features of the method type claims, is considered to be disclosed in the present application.

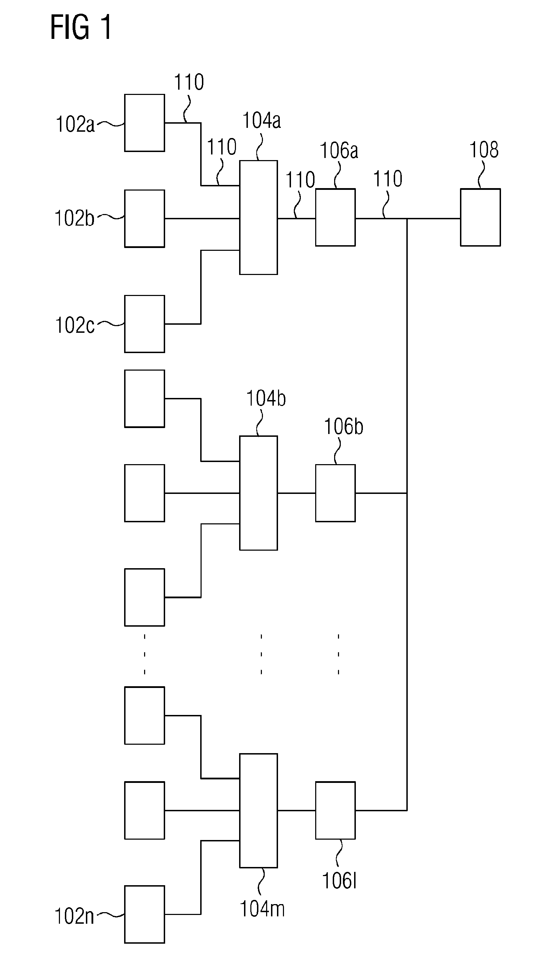

Referring to FIG 1, a schematic view of an automation system 100 is illustrated in accordance with an embodiment of the present invention.

The automation system 100 may be used in any industrial plant for monitoring and controlling a desired process. The automation system 100 includes a set of process devices 102a through 102n, a set of process controllers 104a through 104m, a set of human-machine interface devices 106a through 1061, and an engineering station 108.

Various examples of such industrial processes include, but are not limited to, food industry, automotive industry, and so forth. Accordingly, the process devices 102 may include a wide variety of operational components, such as electric motors, drives, valves, actuators, temperature/pressure sensors and so on.

The process controllers 104 are configured for monitoring and controlling the process devices 102 based on a control logic resident therein. In typical applications, the process controllers 104 are implemented using programmable logic controllers.

The human-machine interface devices 106 provide an interface to a user of the automation system 100. Typically, the human-machine interface devices 106 include a runtime application that implements one or more logical functions. The runtime application is also configured for displaying a set of graphical user interfaces to the user of the automation system 100. The human-machine interface devices 106 are configured to read/write data from/to memory (e.g. internal registers) of process controllers 104. In some applications, the human-machine interface devices 106 may simply perform the logical function of accessing and displaying data to the user of the automation system 100. However, typically, the human-machine interface devices 106 are also configured to implement one or more time-critical logical functions.

The engineering station 108 provides a development environment in which a set of logical functions are designed and developed and compiled to create a runtime application. Various examples of the logical control objects include, but are not limited to, trends, bars, buttons, and so on.

Subsequently, one or more the runtime application is downloaded to the human-machine interface devices 106 as an executable and installed thereon.

All the components 102 through 108 discussed above are communicatively coupled to each other through a communication network 110. The interconnections between selective components as depicted in the adjoining figure are only exemplary. In general, direct communication between any two components is possible over the communication network 110 using suitable communication protocols as generally well known in the art.

In accordance with various exemplary embodiments of the present invention, at least one human-machine interface device 106 is provided with a novel architecture to achieve time deterministic execution of one or more time-critical logical functions assigned thereto, as will now be explained hereinafter.

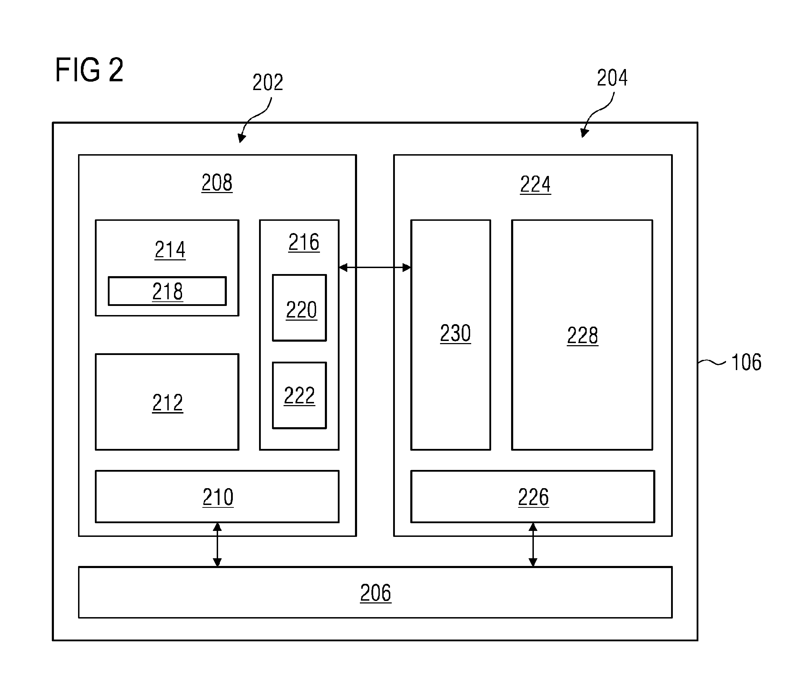

Referring now to FIG 2, a schematic view of a human-machine interface device 106 is illustrated in accordance with an embodiment of the present invention.

The human-machine interface device 106 includes a software interpretation platform 202, a configurable hardware interpretation platform 204, and a peripheral communication infrastructure 206.

The software interpretation platform 202 includes a processing unit 208, a hardware abstraction layer 210, an operating system 212, a runtime application 214, and a first communication driver 216. The runtime application 214 in turn, includes an activation module 218; while the first communication driver 216 includes an excitation module 220 and a response module 222.

The configurable hardware interpretation platform 204 includes a field-programmable gate array 224, an interconnect logic module 226, a real-time processing logic 228, and a second communication driver 230.

The peripheral communication infrastructure 206 includes various physical input/output communication ports provided on the human-machine interface device 106 for communicatively coupling the human-machine interface device 106 to the automation system 100 through the communication network 110.

The software interpretation platform 202 is implemented using the processing unit 208. In various examples of the present invention, the processing unit 208 may be implemented any microprocessor device or the like generally available in the state of the art. Various other modules comprising the software interpretation platform 202 are logical modules that are instantiated on the processing unit 208.

The hardware abstraction layer 210 implements one or more software drivers and acts as an intermediate entity between the actual hardware devices and in particular, the input/output communication ports provided in the peripheral communication infrastructure 206, and the operating system 212. In other words, the hardware abstraction layer 210 is responsible for routing data signals between the peripheral communication infrastructure 206 and the software interpretation platform 202.

The operating system 212 is deployed on the processing unit 208 and a runtime application 214 is instantiated on the operating system 212.

The configurable hardware interpretation platform 204 is instantiated using a field-programmable gate array 224. Various other modules comprising the configurable hardware interpretation platform 204 are logical modules that are implemented on the field-programmable gate array 224 using only hardware configuration or a combination of hardware and software configuration, in accordance with techniques for programming field-programmable gate arrays in general.

The interconnect logic module 226 implements the logical elements in the underlying field-programmable gate array 224 and acts as an intermediate entity between the input/output communication ports provided in the peripheral communication infrastructure 206, and the real-time processing logic 228 implemented on the field-programmable gate array 224 within the configurable hardware interpretation platform 204.

In an exemplary embodiment of the present invention, the configurable hardware interpretation platform 204 is assigned a higher priority for accessing the peripheral communication infrastructure 206 relative to that of the software interpretation platform 202. This will be further understood in regard to the deployment of time-critical logical functions to the configurable hardware interpretation platform 204.

The software interpretation platform 202 is provided with the first communication driver 216 and the configurable hardware interpretation platform 204 is provided with the second communication driver 230. The first and second communication drivers 216, 230 are configured to enable inter-platform communication. As one example, the first communication driver 216 implements any standard communication protocol such as, serial communication. The field-programmable gate array 224 is then configured accordingly such that the second communication driver 230 supports the communication protocol configured in the first communication driver 216 on the software interpretation platform 202. Thus, inter-platform communication is achieved.

In various exemplary embodiment of the present invention, the communication protocol/interface supported on the first communication driver 216 may be any suitable protocol/interface that are generally used in state of the art of the human-machine interface devices. Alternatively, it is possible to design a custom communication protocol/interface for inter-platform communication provided the number of data lines used for the communication is fixed. The second communication driver 230 is configured to support the communication protocol/interface same as that of the first communication driver 216.

In an exemplary embodiment of the present invention, the first communication driver 216 includes the excitation module 220 and the response module 222. The excitation module 220 is configured for transmitting one or more excitation signals to the configurable hardware interpretation platform 204. Similarly, the response module 222 is configured for receiving one or more response signals from the configurable hardware interpretation platform 204 and routing the response signals to one or more logical functions within the runtime application. The inter-platform communication particularly in regard to activation / deactivation of certain logical functions resident on the configurable hardware interpretation platform 204 will be further explained a little later in the present description.

In accordance with various techniques of the present invention, a set of logical functions required to be implemented on the human-machine interface device 106 are classified into at least one of a set of routine logical functions and a set of time-critical logical functions. The routine logical functions are configured and deployed on the software interpretation platform 202 as the runtime application 214. Similarly, the time-critical logical functions are configured and deployed on the configurable hardware interpretation platform 204 as the real-time processing logic 228.

In effect, one or more logical functions instantiated on the configurable hardware interpretation platform 204 are executed therein independent of the software interpretation platform 202. Hence, the techniques of the present invention advantageously facilitate executing the time-critical logical functions in a time deterministic and reliable manner.

It will now be easily understood that it is desirable to assign higher priority to the configurable hardware interpretation platform 204 relative to the software interpretation platform 202 with regard to access to the peripheral communication infrastructure 206 such as to ensure that the necessary data exchange with one or more other devices in the automation system 100 while executing time-critical logical functions is achieved without any delays.

The field-programmable gate array 224 is designed to provide parallel execution paths such that various desired time-critical logical functions are independently processed. The number of such parallel execution paths is only limited by the logic elements in the field-programmable gate array 224. Various prebuilt logical elements may be used for implementing desired time-critical logical functions.

In an exemplary embodiment of the present invention, as mentioned earlier, the runtime application 214 include activation module 218. The activation module 218 includes the relevant logic to activate and deactivate a time-critical logical function resident on the configurable hardware interpretation platform 204, as desired. This is achieved through providing a corresponding data signal to the excitation module 220, which in turn generates and transmits an excitation signal to the second communication driver 230 within the configurable hardware interpretation platform 204.

The operation of the human-machine interface device 106 of the present invention will now be explained.

In various embodiments of the present invention, one or more time-critical logical functions resident on the configurable hardware interpretation platform 204 may be triggered based on a corresponding excitation signal received from the excitation module 220 in the software interpretation platform 202. Alternatively, the time-critical logical functions may be triggered based on a data signal directly received from the peripheral communication infrastructure 206 through the interconnect logic module 226 in the configurable hardware interpretation platform 204.

Similarly, a response signal from one or more time-critical logical functions resident in the configurable hardware interpretation platform 204 may be routed to the response module 222 in the software interpretation platform 202. Alternatively, the response signal from one or more logical functions may be routed as data signals to the peripheral communication infrastructure 206 through the interconnect logic module 226 in the configurable hardware interpretation platform 204.

The operation of the human-machine interface device 106 of the present invention will now be explained with reference to a few specific examples.

As a first example, consider a requirement to implement an emergency stop logical function on a human-machine interface device.

In accordance with prior art techniques, an automation engineer configured the desired logical functionality using a hard key or a soft key. The important requirement is that the automation engineer has to carefully estimate highest possible computational load under various use-cases and ensure that the human-machine interface device remains responsive to a user input for an emergency stop. It is therefore a non logical functional requirement on the whole system. This non-logical function requirement is not only often difficult to achieve in a satisfactory manner but also leads to quite wasteful usage of system resources.

In accordance with the human-machine interface device 106 of the present invention, the automation engineer is simply required to identify the emergency stop logical function as a time-critical logical function and then, use the engineering station to implement the desired logic in the field-programmable gate array 224 of the configurable hardware interpretation platform 204 within the human-machine interface device 106. Therefore, the automation engineer is advantageously relieved of optimizing the whole system to ensure sufficient availability of systems resource even under worst computational load conditions. The configurable hardware interpretation platform 204 may be configured to directly receive the input data signal from corresponding hard or soft key through the excitation module 220 or directly from the peripheral communication infrastructure 206; and update respective process parameters in a corresponding programmable logic controller without any participation of software interpretation platform 202. Thus, the response time is deterministic.

In this example, it is also possible to configure the emergency stop logical function to be active always irrespective of whether a runtime is running or not. This may be achieved for example through configuring a hard key available in the human-machine interface device 106. This ensures that the emergency stop is directly operable even if the operating system 212 has crashed for some reason.

It should be noted that various desired time-critical logical functions may be configured as independent logical elements on the field-programmable gate array 224 and thus, the number of time-critical logical functions is only limited by the availability of logical elements on the field-programmable gate array 224.

As a second example, consider a requirement for processing of video feed from a network camera. In this example, several video feeds are received from individual cameras installed in different regions of an industrial plant. It is required to process these video feeds and display them, either on a single screen or on a series of screens. In addition, it is also required to store the video feeds in a dedicated storage device connected to the automation system for evaluation at a later point in time.

In accordance with various prior art techniques, such a logical functional requirement poses a significant challenge due to the demand of system resources to accomplish the same. When implemented, such logical functionality adversely impacts performance of the human-machine interface device in general. Accordingly, an automation engineer is required to verify and limit the computational load owing to the processing of the video feeds.

In accordance with the human-machine interface device 106 of the present invention, video frame processing algorithm is converted in to set of parallel independent logical elements on the field-programmable gate array 224 and the video feeds are directly routed from the peripheral communication infrastructure 206 to relevant logical elements within the field-programmable gate array 224 in the configurable hardware interpretation platform 204. The response signal is routed to the response module 222 within the software interpretation platform 202 such that the video feeds are displayed to a display screen. In addition, the response signal is also routed to an output port in the peripheral communication infrastructure 206 coupled to the storage device such that the video feed is stored therein. Thus, the computational load on the software interpretation platform 202 is reduced to merely rendering the video feeds.

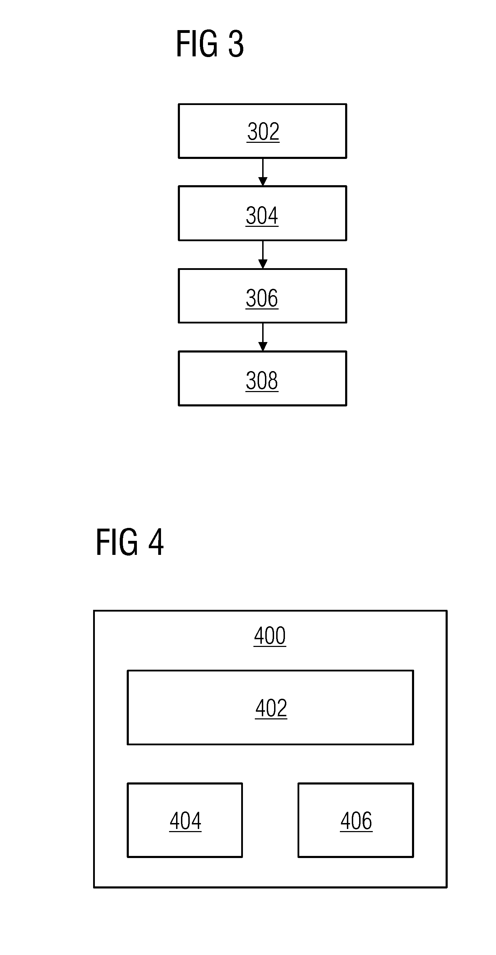

Referring now to FIG 3, a method for configuring a human-machine interface device is illustrated in accordance with an embodiment of the present invention.

At step 302, a set of logical functions for instantiating on the human-machine interface device 106 are defined.

At step 304, the logical functions are subsequently classified into at least one of a set of routine logical functions and a set of time-critical logical functions.

At step 306, a runtime application corresponding to at least one of the routine logical functions is configured and deployed on the software interpretation platform 202. At this step, the first communication driver 216 is also configured in the software interpretation platform 202.

At step 308, a real-time processing logic corresponding to at least one of the time-critical logical functions is configured and deployed on the configurable hardware interpretation platform 204. At this step, the second communication driver 230 is also configured in the configurable hardware interpretation platform 204.

The first communication driver 216 and the second communication driver 230 configured at steps 306 and 308 enable inter-platform communication.

The method also includes mapping a set of input/output data signals corresponding to the peripheral communication infrastructure 206 in the human-machine interface device 106 to at least one of the software interpretation platform and said configurable hardware interpretation platform.

Referring now to FIG 4, a system 400 for configuring a human-machine interface device is illustrated in accordance with an embodiment of the present invention.

The system 400 includes a development module 402, a first configuration module 404 and a second configuration module 406. The system 400 is suitable for configuring the human-machine interface device 106 of the present invention and in one embodiment of the present invention, is embodied in the engineering station 108.

The development module 402 provides an integrated development environment which includes at least a first user interface for defining a set of logical functions for instantiating on the human-machine interface device 106. The integrated development environment further includes at least a second user interface for classifying the logical functions into at least one of a set of routine logical functions and a set of time-critical logical functions.

The first configuration module 404 is configured for compiling a runtime application corresponding to at least one of the routine logical functions, and deploying the runtime application on the software interpretation platform 202.

The first configuration module 404 further configures the first communication driver 216 in the software interpretation platform 202.

The second configuration module 406 is configured for compiling a real-time processing logic corresponding to at least one of the time-critical logical functions, and deploying the real-time processing logic on the configurable hardware interpretation platform.

The second configuration module 406 further configures the second communication driver 230 in the configurable hardware interpretation platform 204.

The first communication driver 216 and the second communication driver 230 together enable inter-platform communication between the software interpretation platform 202 and the configurable hardware interpretation platform 204.

The first and second configuration modules 404, 406 are further configured for mapping a set of input/output data signals corresponding to the peripheral communication infrastructure 206 to at least one of the software interpretation platform 202 and the configurable hardware interpretation platform 204 respectively.

The integrated development environment essentially provides an editor for creating and editing various logical functions. After the set of logical functions have been classified into routine logical functions and time-critical logical functions, the routine logical functions are compiled using the first configuration module 404 in a manner generally understood in the art. However, the time-critical logical functions are routed to the second configuration module 406. The second configuration module 406 essentially includes the logical functionality for generating hardware configuration using a suitable hardware description language. The generation of real-time processing logic 228 and other modules on the configurable hardware interpretation platform 204 are generated using generally known field-programmable gate array configuration techniques which include design entry, analysis & synthesis, placing & routing, timing analysis, pin-planning and net-list generation, and so on.

As software interpretation platform 202 needs to exchange excitation and response signals with configurable hardware interpretation platform 204, the excitation module 220 and response module 222 are configured accordingly. In other words, mapping between output signals from excitation module 220 are mapped to desirable pins on the field-programmable gate array 224 within the configurable hardware interpretation platform 204. Similarly, the input signals on the response module 222 are mapped to relevant pins on the field-programmable gate array 224 within the configurable hardware interpretation platform 204.

The real-time processing logic generated using the second configuration module 406 is transferred to a flash drive internally implemented on the field-programmable gate array 224 or externally attached thereto. The field-programmable gate array 224 is programmed based on the real-time processing logic. As will be realized, the real-time processing logic 228 may be changed as and when required. Thus, the human-machine interface device 106 remains flexible in terms of logical functions that may be assigned thereto and at the same time, desired deterministic behaviour is also achieved with respect to various time-critical logical functions.

It should be that the second configuration module 406 may be directly integrated into system 400 or it may be implemented as an independent system communicatively coupled to the development module 402. The latter embodiment is desirable in case a third-party field-programmable gate array configuration tool is desired to be used. The hardware/software configuration files generated using such third-party tool is exported back to the system 400 and subsequently, transferred to the human-machine interface device 106.

In accordance with a particularly advantageous aspect of the present invention, various aspects related to field-programmable gate array hardware configuration are handled in the background without user participation. The user, for example, an automation engineer, merely classifies the logical functions as routine logical functions or time-critical logical functions. The processing of the time-critical logical functions using the second configuration module 406 is kept transparent to the user.

As generally is understood, the possible logic that can be defined in the field-programmable gate array 224 is almost unlimited, ranging from just a few gates to a full-fledged system-on-chip implementation with a processor core in it. The field-programmable gate array 224 may also include software programs that run on a microprocessor core configured therein. The timing analysis of the field-programmable gate array 224 provides the deterministic time taken required to perform the configured time-critical logical functions.

Once the configurable hardware interpretation platform 204 is set into operation, it is able to independently execute various time-critical logical functions based on inputs received from the peripheral communication infrastructure 206 or the software interpretation platform 202. In effect, the configurable hardware interpretation platform 204 runs all the time/safety critical logical functions in parallel and provides the output to the software interpretation platform 202. If required, the software interpretation platform 202 can be configured to display the results on a display screen. The time taken to execute any particular time-critical logical function is always fixed duration so the human-machine interface device 106 provides a deterministic behaviour.

The present invention therefore provides a human-machine interface device, and a system and method for configuring the same such that various safety and time-critical logical functions are executed in a deterministic and reliable manner without compromising the flexibility of configuring the human-machine interface device using a configuration system as per user requirements.

Furthermore, the present invention provides an architecture that is quite conducive to parallel processing of certain logical functions without unduly clogging main system resources.

The present invention can take the form of a computer program product comprising program modules accessible from computer-usable or computer-readable medium storing program code for use by or in connection with one or more computers, processors, or instruction execution system.

For the purposes of the present description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums in and of themselves as signal carriers are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk, Current examples of optical disks include compact disk--read only memory (CD-ROM), compact disk--read/write (CD-R/W) and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would present themselves, to those of skill in the art without departing from the scope of various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A human-machine interface device (106) suitable for use in an automation system (100), said human-machine interface device (106) comprising:
- a software interpretation platform (202), said software interpretation platform (202) comprising at least one processing unit (208), an operating system (212) deployed on said processing unit (208), a runtime application (214) instantiated on said operating system (212), and
- a configurable hardware interpretation platform (224), said configurable hardware interpretation platform (224) comprising at least one field-programmable gate array (224), said field-programmable gate array (224) configured for independently executing at least one logical function assigned to said human-machine interface device (106) based on a real-time processing logic (228) (228) deployed thereon.

2. The human-machine interface device (106) according to claim 1, wherein said software interpretation platform (202) is provided with a first communication driver (216) and said configurable hardware interpretation platform (224) is provided with a second communication driver (230), said first and second communication drivers (216, 230) being configured to enable inter-platform communication.

3. The human-machine interface device (106) according to claim 2, wherein said first communication driver (216) is provided with an excitation module (220), said excitation module (220) configured for transmitting one or more excitation signals to said configurable hardware interpretation platform (224), and a response module (222), said response module (222) configured for receiving one or more response signals from said configurable hardware interpretation platform (224) and routing said response signals to one or more logical functions within said runtime application (214).

4. The human-machine interface device (106) according to any of claims 1 to 3, wherein said human-machine interface device (106) comprises a peripheral communication infrastructure (206), said peripheral communication infrastructure (206) configured for communicatively coupling said human-machine interface device (106) to said automation system (100), further wherein said software interpretation platform (202) is provided with a hardware abstraction layer (210) and said configurable hardware interpretation platform (224) is provided with an interconnect logic module (226), said hardware abstraction layer (210) and said interconnect logic module (226) configured for routing data signals between said peripheral communication infrastructure (206) and said software interpretation platform (202) and said configurable hardware interpretation platform (224) respectively.

5. The human-machine interface device (106) according to any of the preceding claims, wherein one or more routine logical functions are configured to be performed on said software interpretation platform (202), and further wherein one or more time-critical logical functions are configured to be performed on said configurable hardware interpretation platform (224).

6. The human-machine interface device (106) according to any of claims 1 to 5, wherein said at least one logical function is activated based on one of said excitation signals provided from said excitation module (220) in said software interpretation platform (202).

7. The human-machine interface device (106) according to any of claims 1 to 5, wherein said at least one logical function is activated based on one of said data signals received from said peripheral communication infrastructure (206) through said interconnect logic module (226) in said configurable hardware interpretation platform (224).

8. The human-machine interface device (106) according to any claims 1 to 7, wherein said at least one logical function provides one of said response signals to said response module (222) in said software interpretation platform (202).

9. The human-machine interface device (106) according to any claims 1 to 7, wherein said at least one logical function provides one of said data signals to said peripheral communication infrastructure (206) through said interconnect logic module (226) in said configurable hardware interpretation platform (224).

10. The human-machine interface device (106) according to any of the preceding claims, wherein said configurable hardware interpretation platform (224) is assigned a higher priority for accessing said peripheral communication infrastructure (206) relative to that of said software interpretation platform (202).

11. A method for configuring a human-machine interface device (106) according to any of claims 1 to 10, said method comprising:
- defining a set of logical functions for instantiating on said human-machine interface device (106),
- classifying said logical functions into at least one of a set of routine logical functions and a set of time-critical logical functions,
- configuring a runtime application (214) corresponding to at least one of said routine logical functions, and deploying said runtime application (214) on said software interpretation platform (202), and
- configuring a real-time processing logic (228) corresponding to at least one of said time-critical logical functions, and deploying said real-time processing logic (228) on said configurable hardware interpretation platform (224).

12. The method according to any of the preceding claims further comprising configuring a first communication driver (216) in said software interpretation platform (202) and configuring a second communication driver (230) in said configurable hardware interpretation platform (224) such as to enable inter-platform communication.

13. The method according to any of the preceding claims further comprising mapping a set of input/output data signals corresponding to said peripheral communication infrastructure (206) to at least one of said software interpretation platform (202) and said configurable hardware interpretation platform (224).

14. A system (400) for configuring a human-machine interface device (106) according to any of claims 1 to 10, said system (400) comprising:
- a development module (402), said development module (402) providing a first user interface for defining a set of logical functions for instantiating on said human-machine interface device (106), and further providing a second user interface for classifying said logical functions into at least one of a set of routine logical functions and a set of time-critical logical functions,
- a first configuration module (404), said first configuration module (404) configured for compiling a runtime application (214) corresponding to at least one of said routine logical functions, and deploying said runtime application (214) on said software interpretation platform (202), and
- a second configuration module (406), said second configuration module (406) configured for compiling a real-time processing logic (228) corresponding to at least one of said time-critical logical functions, and deploying said real-time processing logic (228) on said configurable hardware interpretation platform (224).

15. The system (400) according to any of the preceding claims, wherein said first configuration module (404) further configures a first communication driver (216) in said software interpretation platform (202) and said second configuration module (406) further configures a second communication driver (230) in said configurable hardware interpretation platform (224) such as to enable inter-platform communication.

16. The system (400) according to any of the preceding claims wherein said first and second configuration modules (404, 406) are further configured for mapping a set of input/output data signals corresponding to said peripheral communication infrastructure (206) to at least one of said software interpretation platform (202) and said configurable hardware interpretation platform (224) respectively.

## Amended claims

### Amended claims in accordance with Rule 137(2) EPC.

1. A human-machine interface device (106) adapted for use in an automation system (100), said human-machine interface device (106) comprising:
a software interpretation platform (202), said software interpretation platform (202) comprising at least one processing unit (208), an operating system (212) deployed on said processing unit (208), a runtime application (214) instantiated on said operating system (212), **characterized in that** the human-machine interface device (106) comprises a configurable hardware interpretation platform (224) communicatively coupled to the software interpretation platform (202), said configurable hardware interpretation platform (224) comprising at least one field-programmable gate array (224), said field-programmable gate array (224) configured for independent time-deterministic execution of at least one logical function assigned to said human-machine interface device (106) based on a real-time processing logic (228) deployed thereon.

2. The human-machine interface device (106) according to claim 1, wherein said software interpretation platform (202) is provided with a first communication driver (216) and said configurable hardware interpretation platform (224) is provided with a second communication driver (230), said first and second communication drivers (216, 230) being configured to enable inter-platform communication between the software interpretation platform (202) and the configurable hardware interpretation platform (224).

3. The human-machine interface device (106) according to claim 2, wherein said first communication driver (216) is provided with an excitation module (220), said excitation module (220) configured for transmitting one or more excitation signals to said configurable hardware interpretation platform (224), and a response module (222), said response module (222) configured for receiving one or more response signals from said configurable hardware interpretation platform (224) and routing said response signals to one or more logical functions within said runtime application (214).

4. The human-machine interface device (106) according to any of claims 1 to 3, wherein said human-machine interface device (106) comprises a peripheral communication infrastructure (206), said peripheral communication infrastructure (206) configured for communicatively coupling said human-machine interface device (106) to said automation system (100), further wherein said software interpretation platform (202) is provided with a hardware abstraction layer (210) and said configurable hardware interpretation platform (224) is provided with an interconnect logic module (226), said hardware abstraction layer (210) and said interconnect logic module (226) configured for routing data signals between said peripheral communication infrastructure (206) and said software interpretation platform (202) and said configurable hardware interpretation platform (224) respectively.

5. The human-machine interface device (106) according to claim 1, wherein the at least one logical function comprises time-critical logical function.

6. The human-machine interface device (106) according to claims 3, wherein said at least one logical function is activated based on one of said excitation signals provided from said excitation module (220) in said software interpretation platform (202).

7. The human-machine interface device (106) according to claims 4, wherein said at least one logical function is activated based on one of said data signals received from said peripheral communication infrastructure (206) through said interconnect logic module (226) in said configurable hardware interpretation platform (224).

8. The human-machine interface device (106) according to claims 3, wherein said at least one logical function provides one of said response signals to said response module (222) in said software interpretation platform (202).

9. The human-machine interface device (106) according to claims 4, wherein said at least one logical function provides one of said data signals to said peripheral communication infrastructure (206) through said interconnect logic module (226) in said configurable hardware interpretation platform (224).

10. The human-machine interface device (106) according to claim 4, wherein said configurable hardware interpretation platform (224) is assigned a higher priority for accessing said peripheral communication infrastructure (206) relative to that of said software interpretation platform (202).

11. A method for configuring a human-machine interface device (106), said method comprising:
- defining a set of logical functions for instantiating on said human-machine interface device (106),
- classifying said logical functions into at least one of a set of routine logical functions and a set of time-critical logical functions,
- configuring a runtime application (214) corresponding to at least one of said routine logical functions, and deploying said runtime application (214) on said software interpretation platform (202), and
- configuring a real-time processing logic (228) corresponding to at least one of said time-critical logical functions, and deploying said real-time processing logic (228) on said configurable hardware interpretation platform (224).

12. The method according to claim 11 further comprising configuring a first communication driver (216) in said software interpretation platform (202) and configuring a second communication driver (230) in said configurable hardware interpretation platform (224) such as to enable inter-platform communication between the software interpretation platform (202) and the configurable hardware interpretation platform (224).

13. The method according to claim 11 further comprising mapping a set of input/output data signals corresponding to said peripheral communication infrastructure (206) to at least one of said software interpretation platform (202) and said configurable hardware interpretation platform (224).
